# EUROPEAN PATENT APPLICATION

(11) **EP 2 085 873 A2**
(43) Date of publication of application: **05.08.2009**
(21) Application number: 09151436.4
(22) Date of filing: 27.01.2009
(51) Int. Cl.: G06F 3/12

(54) **Printing system**

(30) Priority: 29.01.2008 JP 2008017259
(71) Applicant: Brother Kogyo Kabushiki Kaisha, Nagoya-shi, Aichi-ken 467-8561 (JP)
(72) Inventor: Sugimoto, Masahiro c/o Intellectual Property Dept.,, Nagoya-shi, Aichi-ken 467-8562 (JP)
(74) Representative: Prüfer & Partner GbR European Patent Attorneys

(57) **Abstract**

A personal computer (11A, 11B and 11C) identifies a target of a printing error in a printer (21). At this time, the personal computer (11A, 11B and 11C) identifies the target of the printing error in the printer (21) as a print file, based on an identification code obtained together with status information (51) which represents error information. The personal computer (11A, 11B and 11C) waits for the printer (21) to restore the error. The personal computer (11A, 11B and 11C) determines whether or not the printer (21) has restored the error based on the status information (51) obtained from the printer (21) on a regular basis or when driven by some event. Next, the personal computer (11A, 11B and 11C) retransmits the print file thus identified to the printer (21). Alternatively, the printer (21) re-receives the print file.

## Description

### CROSS-REFERENCE TO RELATED APPLICATIONS

The present application claims priority from Japanese Patent Application No. 2008-017259 filed on January 29, 2008.

### BACKGROUND OF THE INVENTION

### 1. Field of the Invention

One or more aspects of the present invention relate to a printing system incorporating a printer usable in a network to which plural information processing devices are connected.

### 2. Description of Related Art

As a conventional printing system, Japanese Patent Application Laid-open No. 2002-358188, for instance, discloses the printing system which informs a user involved in print data corresponding to status information of a printing situation included in the status information via electronic mail, telephone and the like. Therefore, subject identification information including either a user's ID or an IP address of a personal computer or the like is attached to print data transmitted from the personal computer to a printer.

Thereby, such print data enables the user to obtain the printed stuff upon completion of the printing process and to promptly resolve a printing error if it occurs.

However, a printer of which buffer has small storage capacity, such as a label printer, sometimes may not be able to store even data to be printed on a printing medium. In this case, if a printing error occurs to such type of printer, print data involved in the printing error is lost. Therefore, a user needs to transmit the print data from his/her personal computer to the printer again.

For retransmitting the print data, the user finds out the print data involved in the printing error by making the use of an editor or the like started in his/her personal computer. If the user can successfully find out the print data, he/she carries out an operation to put the print data printed. In a worse case, the print data involved in the printing error may be lost at the side of the user's personal computer. In case there are a large number of similar print data, the user sometimes may not be able to find out the print data involved in the printing error from there.

So, for a user, an operation to retransmit print data from the user's personal computer to a printer is as bothersome as or more bothersome than an operation to transmit the print data for the first time.

### SUMMARY OF THE INVENTION

The present invention has been made for overcoming the above-described problems and has as object to provide a printing system capable of automatically retransmitting print data regarding printing errors in a printer, from an information processing device to the printer.

To achieve the object of the present invention, there is provided a printing system (1) comprising: a plurality of information processing devices (11A, 11B and 11C) wherein print data (41A) is created; a printer (21) which prints print data (41A) created in any of the plurality of information processing devices (11A, 11B and 11C) and creates status information (51) with respect to printing the print data (41A); and a network (101) which is formed by connecting the plurality of information processing devices (11A, 11B and 11C) with the printer (21); wherein the plurality of information processing devices (11A, 11B and 11C) respectively executes, when the print data (41A) has been created, processes of: (a) creating identification code information (45A) which includes at least information (42A) for identifying an information processing device (11A, 11B and 11C) which transmits the print data (41A), information (43A) for identifying the print data (41A) and information (44A) for identifying a user who transmits the print data (41A); (b) transmitting the print data (41A) to the printer (21), with the identification code information (45A) attached thereto; (c) obtaining the status information (51) from the printer (21) on a regular basis or in response to a special event; and (d) identifying the print data (41A) and retransmitting the identified print data (41A) to the printer (21), if it is determined that the status information (51) concerns a printing error in the print data (41A) created in the information processing device (11A, 11B and 11C) which makes it impossible for the printer (21) to resume printing, by analyzing the status information (51); alternatively, the printer (21) executes controls as follows, at the time of printing the print data (41A): (1) obtaining the identification code information (45A) from the print data (41A); and (2) including the identification code information (45A) in the status information (51), together with information concerning the printing error, in case the printing error occurs in the print data (41A).

In addition, [including the identification code information (45A) in the status information (51), together with information concerning the printing error] includes [handling information concerning the printing error as the status information (51) and attaching the identification code information (45A) to the status information (51)]. Furthermore, [information (42A) for identifying an information processing device (11A, 11B and 11C) which transmits the print data (41A)] includes, for instance, an IP address, a MAC address, host name, or identification code of the information processing device. Furthermore, [information (43A) for identifying the print data (41A)] includes a job name, for instance. Furthermore, [information (44A) for identifying a user who transmits the print data (41A)] includes a user name, for instance.

Further developments of the invention are given in the dependent claims.

### BRIEF DESCRIPTION OF THE DRAWINGS

FIG. 1 is a block diagram showing an internal configuration of a printing system according to the present embodiment;
FIG. 2 is a view showing step by step an example of process wherein the characteristics of the printing system become apparent;
FIG. 3 is a view showing step by step an example of process wherein the characteristics of the printing system become apparent;
FIG. 4 is a view showing step by step an example of process wherein the characteristics of the printing system become apparent;
FIG. 5 is a view showing step by step an example of process wherein the characteristics of the printing system become apparent;
FIG. 6 is a view showing step by step an example of process wherein the characteristics of the printing system become apparent;
FIG. 7 is a view showing step by step an example of process wherein the characteristics of the printing system become apparent;
FIG. 8 is a view showing step by step an example of process wherein the characteristics of the printing system become apparent;
FIG. 9 is a flow chart diagram showing a control program of a personal computer which constitutes the printing system;
FIG. 10 is a flow chart diagram showing a control program of the personal computer which constitutes the printing system;
FIG. 11 is a flow chart diagram showing a control program of a printer which constitutes the printing system;
FIG. 12 is a flow chart diagram showing a control program of the personal computer which constitutes the printing system; and
FIG. 13 is a flow chart diagram showing a control program of the personal computer which constitutes the printing system.

### DETAILED DESCRIPTION OF THE PREFERRED EMBODIMENTS

A detailed description of a preferred embodiment of a printing system embodying the present invention will now be given referring to the accompanying drawings.

### [1. Characteristics of Printing System]

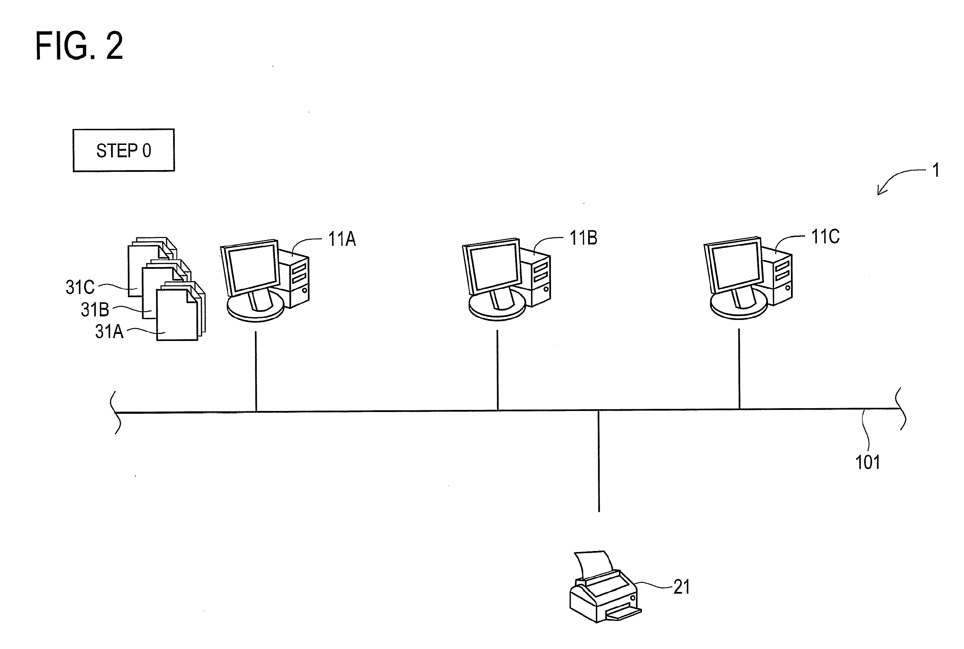

FIG. 2 through FIG. 8 show step by step an example of processes wherein the characteristics of a printing system 1 according to the present embodiment become apparent. In the printing system 1 according to the present embodiment, a plurality of personal computers 11A, 11B, 11C are connected to a printer 21 through a network 101 enabling a two-way communication, as shown in FIG. 2 through FIG. 8.

In step 0 as shown in FIG. 2, plural print files are created in the personal computer 11A. In the example shown in FIG. 2, three print files 31A, 31B and 31C are created in the personal computer 11A.

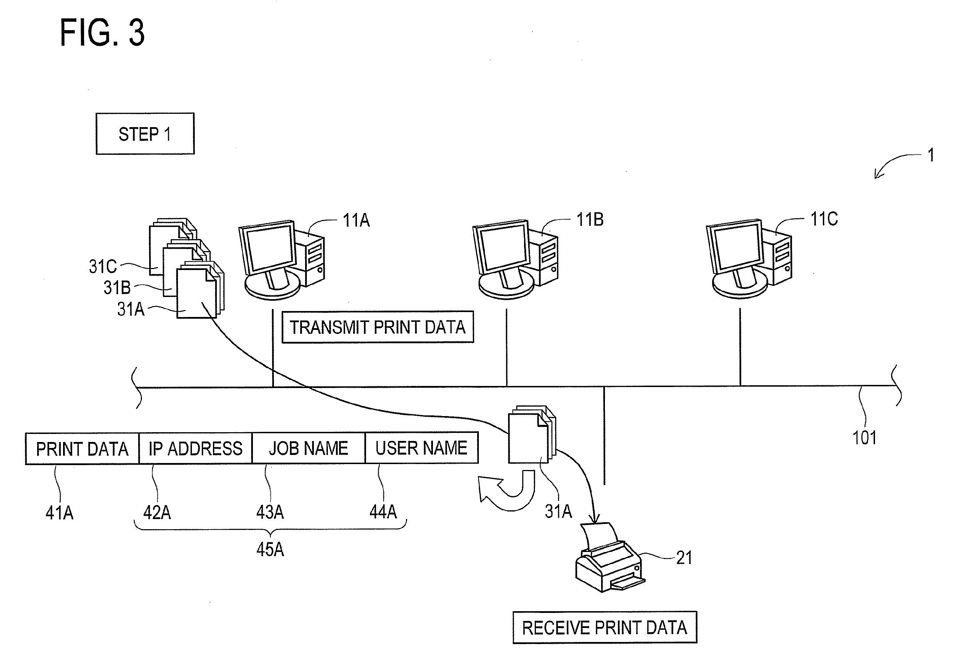

In step 1 in FIG. 3, any of the print files are transmitted to the printer 21 in the personal computer 11A. In the example shown in FIG. 3, the print file 31A is transmitted to the printer 21 in the personal computer 11A. Alternatively, the print file 31A is received at the printer 21. At this time, the personal computer 11A attaches identification code information 45A to print data 41A which is the main constituent of the print file 31A.

Data constituting the identification code information 45A includes at least the IP address 42A, the job name 43A and the user name 44A. The IP address 42A is the address for the personal computer 11A. The job name 43A is the name for identifying the print file 31A. The user name 44A is the name for a user who is supposed to have used the personal computer 11A when the print file 31A was created.

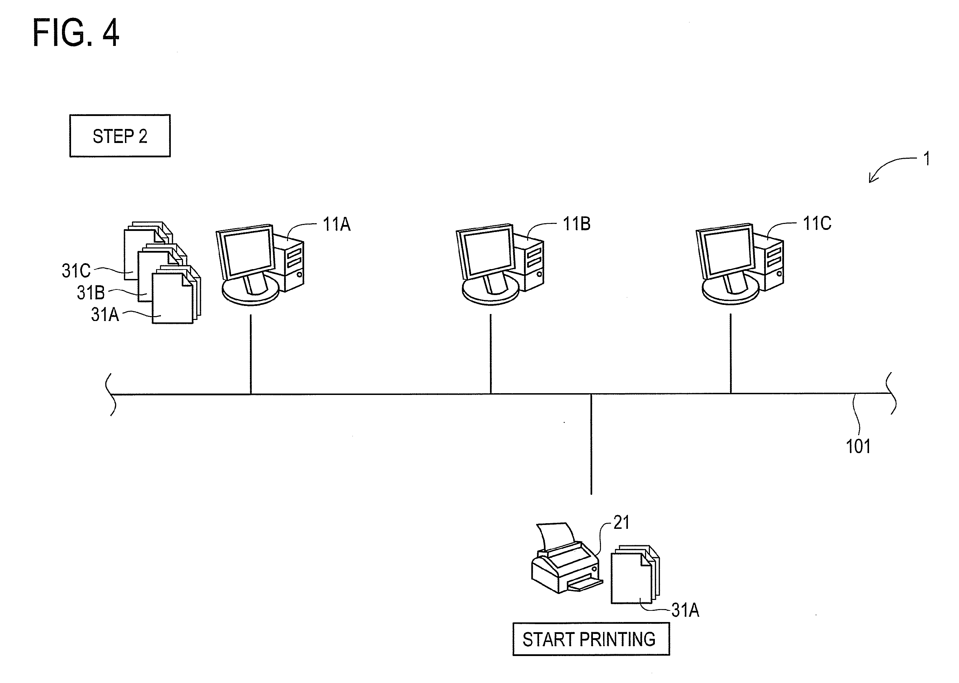

In Step 2 in FIG. 4, the printer 21 starts printing of the print file 31A (the print data 41A). At this time, the printer 21 stores the identification code information 45A (refer to FIG. 3) which is attached to the print data 41A of the print file 31A.

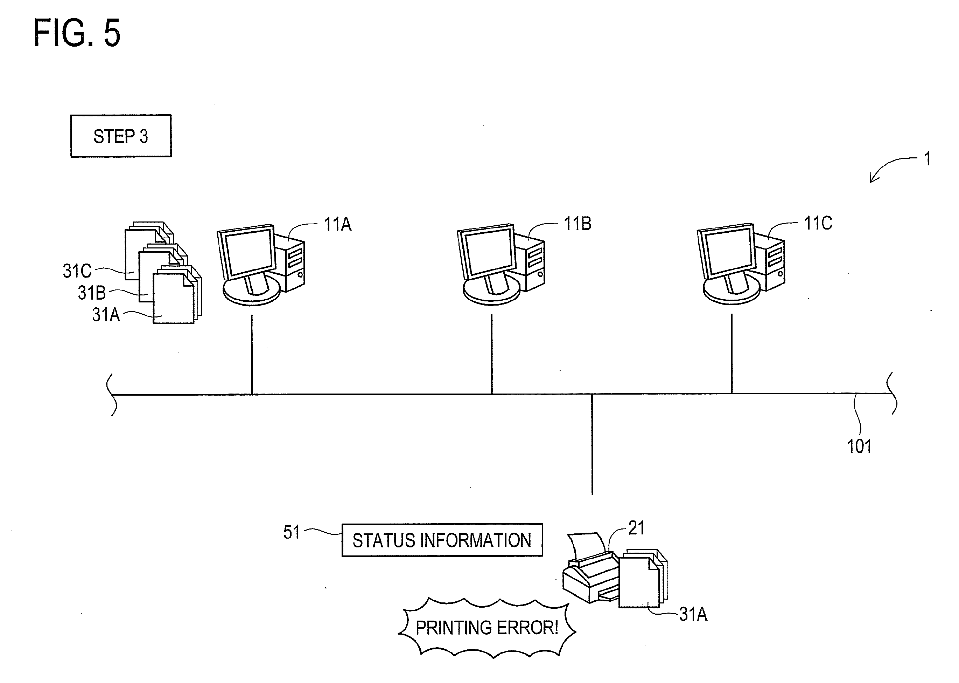

In Step 3 as shown in FIG. 5, the printer 21 creates and stores status information 51. At this time, if a printing error occurs in printing the print file 31A (the print data 41A), the printer 21 creates error information as status information 51 and then stores this error information.

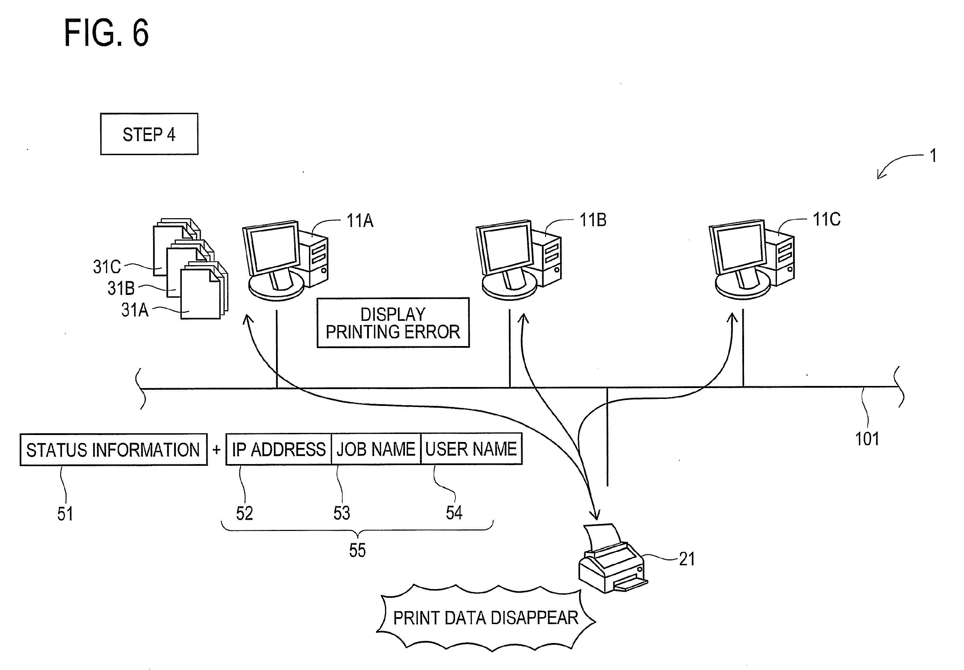

In Step 4 as shown in FIG. 6, the print data 41A of the print file 31A wherein the printing error occurs (refer to FIG. 3) disappears from the printer 21. Alternatively, error information of the printer 21 is obtained in the personal computer 11A which displays such error. The personal computer 11A obtains status information 51 from the printer 21 on a regular basis or when driven by some event. Further, the personal computer 11A obtains identification code 55 of the print file 31A (the print data 41A) to be printed by the printer 21.

Data constituting the identification code information 55 includes at least the IP address 52, the job name 53 and the user name 54. The identification code information 55 is the same as the identification code information 45A which is stored at the time the printer 21 starts printing of the print file 31A (Step 2 in FIG. 4). The IP address 52, the job name 53 and the user name 54 have the same contents as the IP address 42A, the job name 43A and the user name 44A (refer to FIG. 3).

The personal computer 11A displays the printing error only in the case data of the IP address 52 is the address of the personal computer 11A itself.

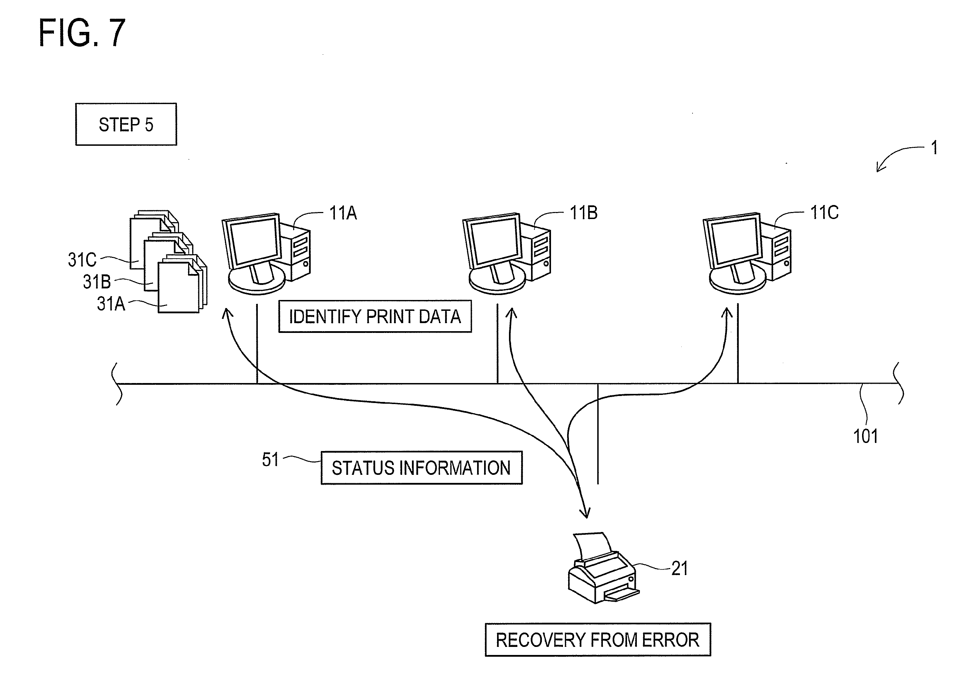

In Step 5 as shown in FIG. 7, the personal computer 11A identifies the target of the printing error in the printer 21. At this time, the personal computer 11A identifies the target of the printing error in the printer 21 as the print file 31A, based on the identification code 55 (refer to FIG. 6) obtained together with the status information 51 which represents error information.

The personal computer 11A waits for the printer 21 to restore the error. The personal computer 11A determines whether or not the printer 21 has restored the error based on status information 51 obtained from the printer 21 on a regular basis or when driven by some event.

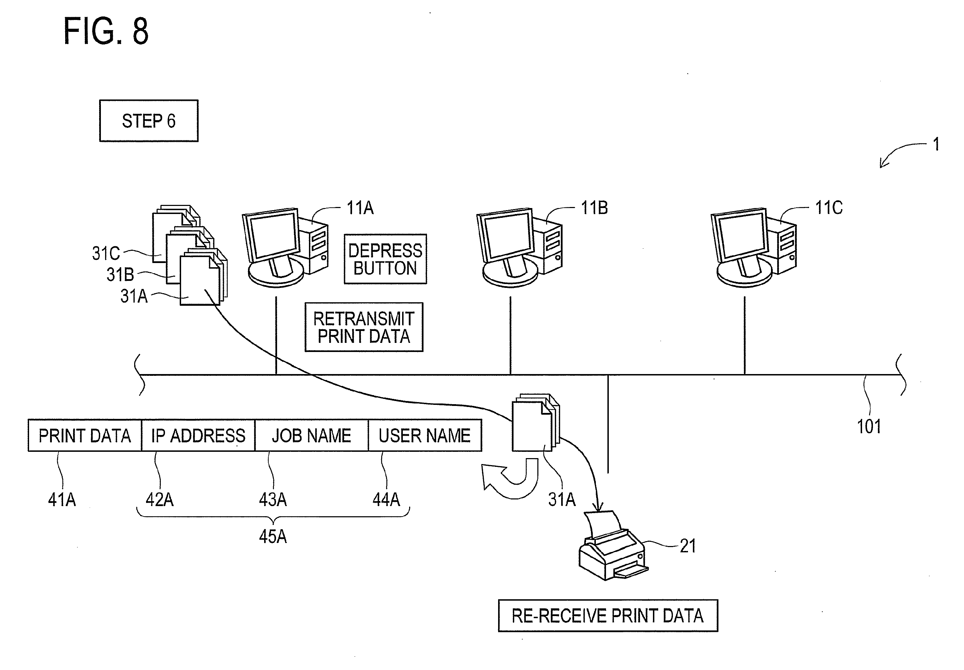

In Step 6 as shown in FIG. 8, the personal computer 11A retransmits the print file 31A thus identified to the printer 21. Alternatively, the printer 21 re-receives the print file 31A. The personal computer 11A attaches the identification code information 45A to the print data 41A which is the main constituent of the print file 31A, even in this retransmission, as is the case with the Step 1 in FIG. 3. However, triggered by the user depressing the corresponding button, the personal computer 11A carries out this retransmission.

The steps in FIG. 2 through FIG. 8 include explanations regarding the operations which are executed between the personal computer 11A and the printer 21. Similarly, the characteristics of the printing system 1 according to the present embodiment are also apparent between the personal computers 11B and 11C and the printer 21.

### [2. Internal Configuration of the Printing System]

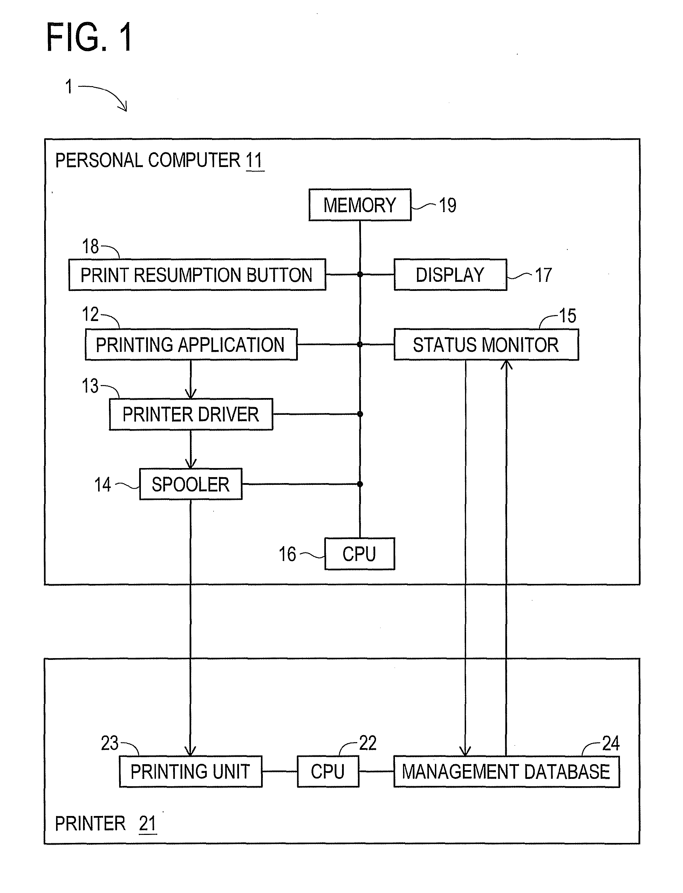

FIG. 1 is a block diagram showing an internal configuration of the printing system 1 according to the present embodiment. In the printing system 1 according to the present embodiment, the plurality of personal computers 11A, 11B and 11C are connected to the printer 21 through the network 101 as was described earlier (refer to FIG. 2 through FIG. 8). The internal configuration of each personal computer 11A, 11B and 11C will first be described.

The personal computers 11A, 11B and 11C each have the same configuration. In FIG. 1, only one personal computer is shown and letters A, B and C are omitted from the combinations with numerical symbol 11.

As shown in FIG. 1, the personal computer 11 has a status monitor 15. The status monitor 15 serves to obtain status information 51 (refer to FIG. 5, FIG. 6 and FIG. 7) and identification code information 55 (refer to FIG. 6) from the printer 21 using an SNMP protocol. The status information 51 (refer to FIG. 5, FIG. 6 and FIG. 7) includes numerical value data and the like showing the status of the printer 21. The identification code information 55 (refer to FIG. 6) includes character string data and the like indicating at least the IP address 52, the job name 53 and the user name 54.

A printing application 12 is activated in the personal computer 11. The printing application 12 is often used as application software having an editor function. A print instruction is transmitted from the printing application 12 to a printer driver 13. The printer driver 13 generates print processing data (in the one example shown in FIG. 2 through FIG. 8, the print files 31A, 31B and 31C) with respect to the printer 21 in response to the print instruction. The print processing data thus generated is temporarily stored in a spooler 14 and is then sequentially outputted to the printer 21.

The CPU 16 executes this control. The CPU 16 is connected to a display 17, a print resumption button 18 and a memory 19. The print resumption button 18 represents one portion of an input device. Accordingly, the print resumption button 18 may be a key provided on a keyboard or a display button on the display 17 which is to be clicked with a mouse. In one example shown in FIG. 2 through FIG. 8, the memory 19 stores the print data 41A and the identification code information 45A in one set.

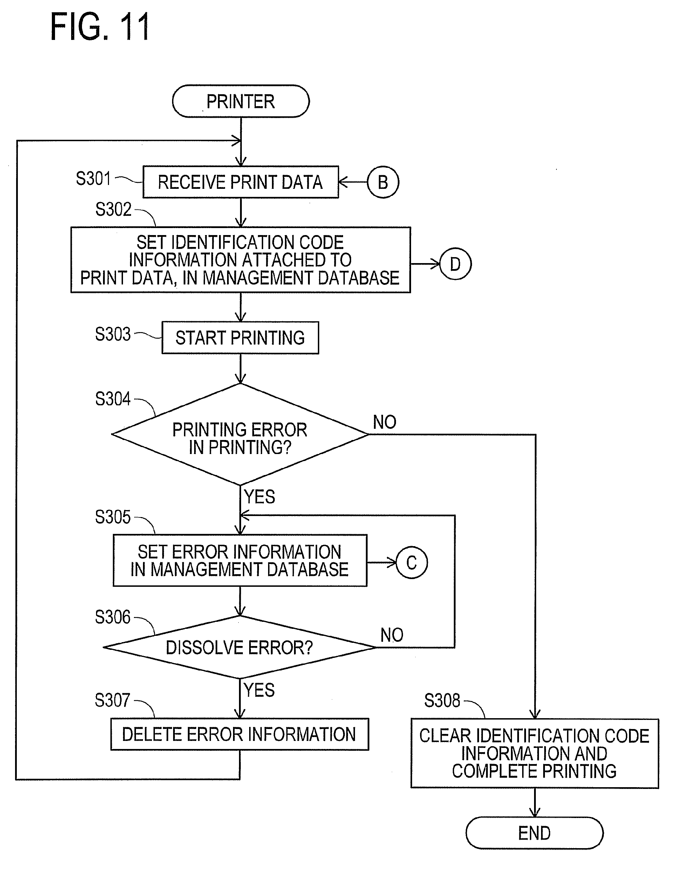

In the printer 21, a printer unit 23 and a management data base 24 and the like are connected to a CPU 22 which executes print control as shown in FIG. 11 below. In one example shown in FIG. 2 through FIG. 8, the identification code information 45A and the status information 51 and the like are stored in the management data base 24.

### [3. Operation in Printing System]

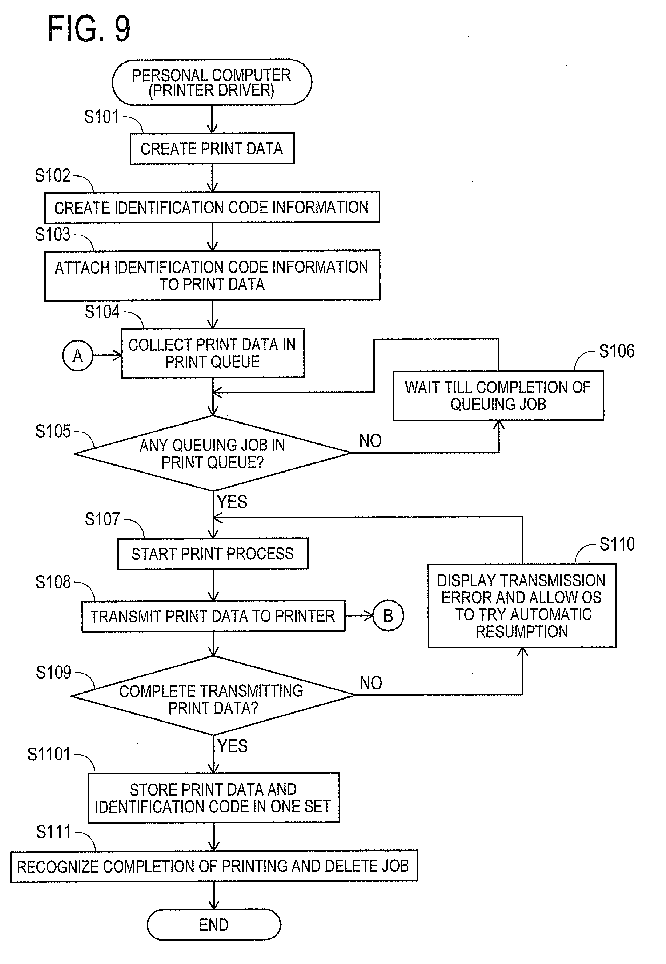

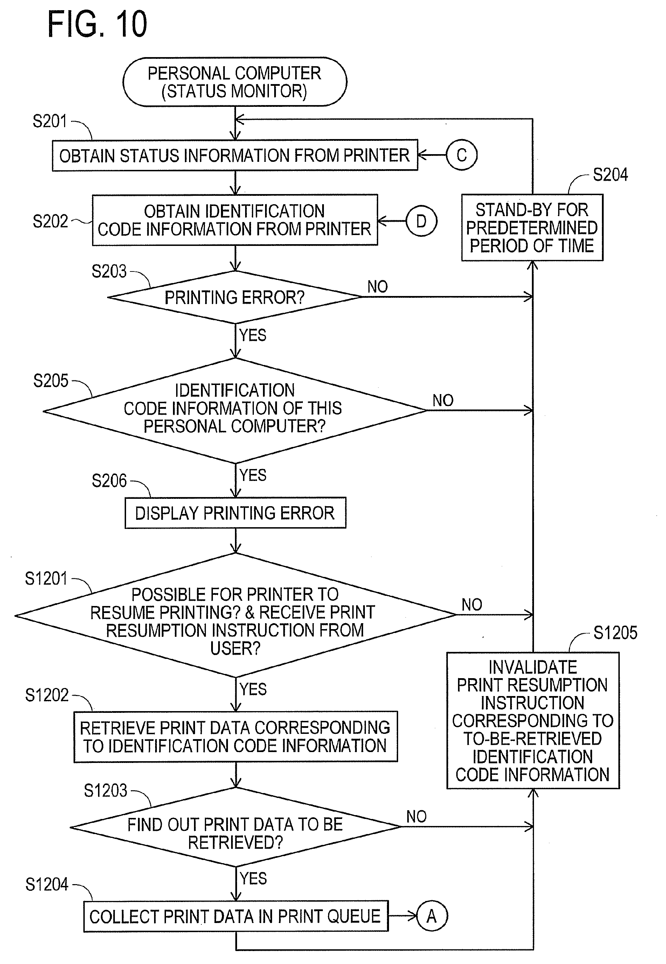

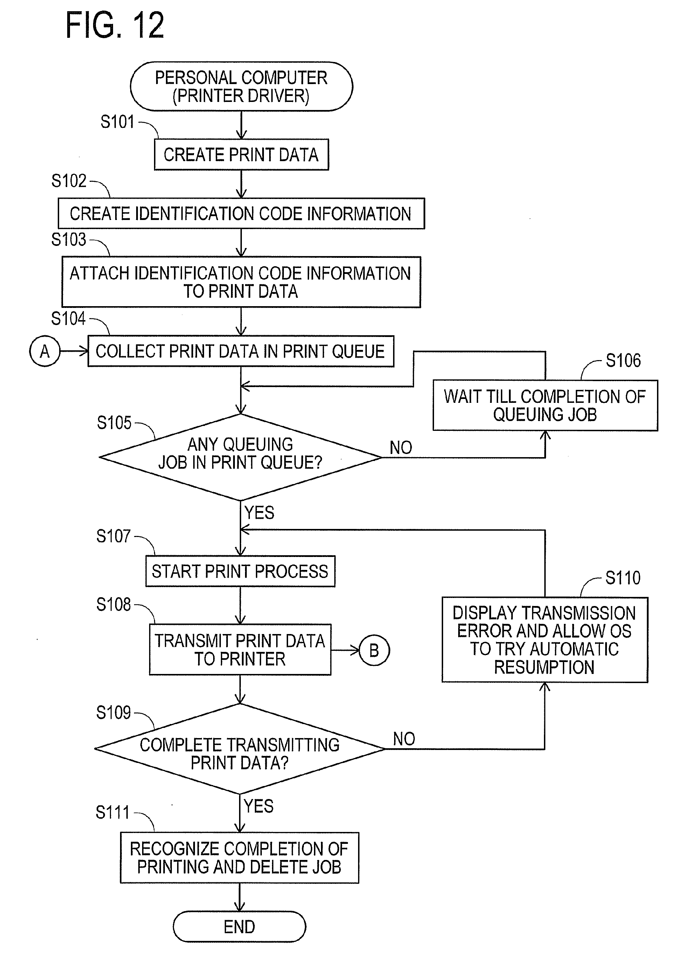

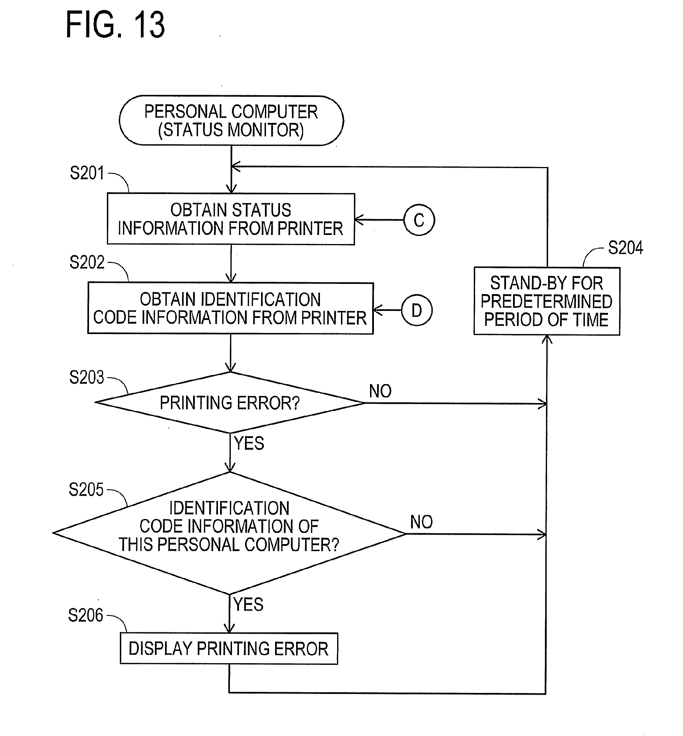

FIG. 9 and FIG. 10 are flow charts of a control program executed in the personal computer 11 which constitutes the printing system 1 according to the present embodiment. FIG. 11 is a flow chart of the control program executed in the printer 21 which constitutes the printing system 1 according to the present embodiment. The personal computers 11A, 11B and 11C (refer to FIG. 2 through FIG. 8) each execute control of the same operation. Thus, except explanation of a specific case using FIG. 2 through FIG. 8, in the description of FIG. 9 and FIG. 10 (and FIG. 12 and FIG. 13), similarly with the case shown in FIG. 1, only one personal computer is shown and letters A, B and C are omitted from the combinations with numerical symbol 11.

### [3-1. Operation of Printer Driver in Personal Computer]

The control program shown in FIG. 9 is executed in the personal computer 11 through the printer driver 13, each time a print processing instruction is transmitted from the printing application 12.

First, print data is created in S101. In one example shown in FIG. 2 through FIG. 8, the print data 41A which is the main constituent of the print file 31A is created.

In S102, identification code information is created. This identification code information corresponds to the print data created in S101. In one example shown in FIG. 2 through FIG. 8, the identification code information 45A is created. This identification code information 45A includes the various types of data such as the IP address 42A, the job name 43A and the user name 44A.

In S103, the identification code information is attached to the print data. In one example shown in FIG. 2 through FIG. 8, the identification code information 45A is attached to the print data 41A, as shown in FIG. 3 and FIG. 8. As a result, the print file 31A is generated.

In S104, the print data (including the identification code information) is collected in a print queue. In one example shown in FIG. 2 through FIG. 8, the print data 41A and the identification code information 45A are collected in the print queue as one job (the print file 31A). Thereafter the flow proceeds to S105. A similar process is carried out in S1204 of FIG. 10 below, after which the flow proceeds to S105.

In S105, it is determined whether or not any queuing job is present in the print queue. If any queuing job is present (S105: NO), the flow proceeds to S106. In S106, after waiting till completion of queuing job, the flow reverts to S105. Alternatively, if no queuing job is present (S105: YES), the flow proceeds to S107 in which a print process is started.

In S108, the print data (including the identification code information as well) is transmitted to the printer 21. The print data thus transmitted (also including the identification code information) is received at the printer 21 in S301 as shown in FIG. 11 below. In one example shown in FIG. 2 through FIG. 8, the print file 31A (the print data 41A and the identification code information 45A) is (re)transmitted to the printer 21 as shown in FIG. 3 and FIG. 8.

In S109, it is determined whether or not transmission of the print data has been completed. Here, if the transmission of the print data has not yet been completed (S109: NO), the flow proceeds to S110 and a transmission error message is displayed on the display 17. Further, in S110, the OS tries automatic resumption. Thereafter, the flow is reverted to S107. Alternatively, if the transmission of the print data has been completed (S109: YES), the flow proceeds to S1101.

In S1101, the print data and the identification code information are stored in one set. In one example shown in FIG. 2 through FIG. 8, the print data 41A and the identification code information 45A are stored as one set in the memory 19.

Thereafter, the flow proceeds to S111, in which completion of printing is recognized and the job is deleted from the print queue. In one example shown in FIG. 2 through FIG. 8, the print data 41A and the identification code information 45A are deleted from the print queue as one job (the print file 31A).

### [3-2. Operation of Status Monitor in Personal Computer]

In the personal computer 11, the control program shown in FIG. 10 is executed through the status monitor 15.

First, status information is obtained from the printer 21 in S201. In one example shown in FIG. 2 through FIG. 8, the status information 51 is obtained from the printer 21 as shown in FIG. 5 through FIG. 7. The status information 51 thus obtained includes error information which is set in the management data base 24 in S305 of FIG. 11 below.

In S202, identification code information is obtained from printer 21. In one example shown in FIG. 2 through FIG. 8, the identification code information 55 is obtained from the printer 21, as shown in FIG. 6. The identification code information 55 includes various types of data such as the IP address 52, the job name 53 and the user name 54. The identification code information 55 thus obtained is the same as the identification code information 45A which is set in the management data base 24 in S302 of FIG. 11 below.

In S203, it is determined whether or not a printing error which invalidates print resumption has occurred in the printer 21. This determination is carried out based on the status information obtained in S201 above. In one example shown in FIG. 2 through FIG. 8, this determination is carried out based on the identification code information 55 (the error information). Here, if no printing error which invalidates resumption occurs in the printer 21 (S203: NO), the flow proceeds to S204. Here, if a printing error message in S206 below is displayed on the display 17, this message is deleted.

In S204, the process is placed in stand-by for a predetermined period of time. This period of time is 30 seconds, for instance. Thereafter, the flow reverts to S201 above. Alternatively, if a printing error which invalidates resumption occurs in the printer 21 (S203: YES), the flow proceeds to S205.

In S205, it is determined whether or not the identification code information obtained in S202 above indicates the personal computer 11, itself. In one example shown in FIG. 2 through FIG. 8, this determination is carried out based on the IP address 52 of the identification code information 55. Here, if the identification code information obtained in S202 above does not indicate the personal computer 11 itself (S205: NO), the flow proceeds to S204 above. After the process is placed in stand-by for a predetermined period of time, the flow reverts to S201 above. Alternatively, if the identification code information obtained in S202 above indicates the personal computer 11 itself (S205: YES), the flow proceeds to S206.

In S206, a printing error message is newly displayed or updated and displayed on the display 17. This message also displays information whereby print data wherein the printing error has occurred is identified. In one example shown in FIG. 2 through FIG. 8, the job name and the user name, which are indicated by the job name 53 and the user name 54 of the identification code information 55, become the corresponding identification information. If the print resumption button 18 is displayed on the display 17, the printing error message and the print resumption button 18 are displayed on the display 17.

Thereafter, in S1201, it is determined whether or not it is possible for the printer 21 to resume printing and if a print resumption instruction was received from a user. The determination on whether or not it is possible for the printer 21 to resume printing is carried out based on the status information obtained in S201 above. The determination on whether or not a print resumption instruction is received from a user is carried out based on the control signal outputted in response to depression of the print resumption button 18. In one example shown in FIG. 2 through FIG. 8, this determination is carried out based on the identification code information 55. Here, if it is impossible for the printer 21 to resume printing or if no print resumption instruction is received from a user (S1201: NO), the flow proceeds to S204 above. Then, the process is placed in stand-by for a predetermined period of time, after which the flow reverts to S201 above. Alternatively, if it is possible for the printer 21 to resume printing and if a print resumption instruction is received from a user (S1201: YES), the flow proceeds to S1202.

In S1202, print data corresponding to the identification code information obtained in S202 above is retrieved. The print data which is the target for the retrieval regards the printing error which occurs in the printer 21 and is stored in the memory 19 in S1101 of FIG. 9 above. Accordingly, in the print data stored in the memory 19, data which is the target for the retrieval includes data which is stored in one set with the identification code information having the same contents as the identification code information obtained in S202 above. In one example shown in FIG. 2 through FIG. 8, the identification code information 55 and the identification code 45A of the print data 41A which is the main constituent of the print file 31A coincide. As a result, the print data 41A of the print file 31A becomes the target for the retrieval.

Thereafter, in S1203, it is determined whether or not print data which is the target for the retrieval is found. Here, if print data which is the target for the retrieval is not found (S1203: NO), the flow proceeds to S1205 below. Alternatively, if print data which is the target for the retrieval is found (S1203: YES), the flow proceeds to S1204.

In S1204, the print data which is the target for the retrieval (including the identification code information) is collected in the print queue. In one example shown in FIG. 2 through FIG. 8, the print data 41A and the identification code information 45A are collected in the print queue as one job (the print file 31A). Thereafter, the flow proceeds to S1205.

This process corresponds to S104 in FIG. 9 above. Accordingly, once this process is executed in the printer driver 13, the flow proceeds to execution of the processes following S105 in FIG. 9 above.

In S1205, a print resumption instruction corresponding to the identification code information used in the retrieval process in S1202 above is invalidated. Accordingly, in one example shown in FIG. 2 through FIG. 8, even if a user depresses at this point the print resumption button 18 for transmitting a print resumption instruction to the print file 31A (which is mainly constituted of the print data 41A), such depression of the button is invalidated. Thereafter, the flow proceeds to S204, and after the process is placed in stand-by for a predetermined period of time, the flow reverts to S201 above.

The control program which is shown in FIG. 10 and which is executed through the status monitor 15 is executed when driven by some event. In this case, however, this control program shown in FIG. 10 is completed when the process in S204 above is executed, without execution of a loop process through S204 above.

### [3-3. Operation of Printer]

Alternatively, the printer 21 executes the control program shown in FIG. 11.

First, the print data (including the identification code information) is received from the personal computer 11 in S301. This print data (including the identification code information) is transmitted from the personal computer 11 in S108 of FIG. 9 above. In one example shown in FIG. 2 through FIG. 8, the print file 31A (the print data 41A and the identification code information 45A) is (re)received at the printer 21 as shown in FIG. 3 and FIG. 8.

In S302, the identification code information attached to the print data is set in the management data base 24. In one example shown in FIG. 2 through FIG. 8, various types of data such as the IP address 42A, the job name 43A and the user name 44A of the identification code information 45A as attached to the print data 41A of the print file 31A are set in the management data base 24. As a result, the personal computer 11 can obtain the identification code information 55 which has the same contents as the identification code information 45A from the printer 21, in S202 of FIG. 10 above.

In S303, the printing unit 23 starts printing. In one example shown in FIG. 2 through FIG. 8, the printing unit 23 starts printing based on the print data 41A which is the main constituent of the print file 31A (refer to FIG. 4).

In S304, it is determined whether or not an error has occurred in printing. Here, if an error has occurred in printing (S304: YES), the flow proceeds to S305. In S305, the error information is set in the management data base 24. In one example shown in FIG. 2 through FIG. 8, the error information is set in the management data base 24 as the status information 51. As a result, the personal computer 11 can obtain the status information 51 representing error the information from the printer 21 in S201 of FIG. 10 above. The status information 51 which represents the error information is in an attachment relationship with the identification code information 45A (the identification code information 55) which is already set in the management data base 24 in S302 above.

In S306, it is determined whether or not the error is dissolved. Here, if the error is not dissolved (S306: NO), the flow reverts to S305 above. Alternatively, if the error is dissolved (S306: YES), the flow proceeds to S307.

In S307, the error information is deleted. Incidentally, if the status of the printer 21 changes, as is the case with the conventional background art, this will be reflected in the status information 51 set in the management data base 24.

Thereafter, the flow reverts to S301 above. As a result, in one example shown in FIG. 2 through FIG. 8, the print file 31A (the print data 41A and the identification code information 45A) is re-received at the printer 21, as shown in FIG. 8.

Alternatively, if an error has not occurred in printing (S304: NO), the flow proceeds to S308. In S308, the identification code information thus set in S302 above is cleared from the management data base 24. As a result, in one example shown in FIG. 2 through FIG. 8, the attachment relationship between the status information 51 and the identification code information 45A (the identification code information 55) is cancelled. Thereafter, printing in the printer 21 is thus completed.

### [4. Summary]

As was described earlier in detail, in the printing system 1 according to the present embodiment, the plurality of personal computers 11A, 11B and 11C and the printer 21 are connected through the network 101, as shown in FIG. 2 through FIG. 8.

After creating the print data 41A which is the main constituent of the print file 31A (S101), the personal computer 11A creates the identification code information 45A which includes at least the IP address 42A, the job name 43A and the user name 44A (S102). Then, the personal computer 11A transmits the print file 31A with the identification code 45A attached to the print data 41A to the printer 21 (S103, S108).

Further, the personal computer 11A obtains the status information 51 and the identification code information 55 from the printer 21 on a regular basis or when driven by some event (S201, S202). If it is determined, as a result of analyzing the status information 51 and the identification code information 55 (S203, S205), that the status information 51 regards a printing error in the print data created in the personal computer 11A, which makes it impossible for the printer 21 to resume printing (S203; YES, S205: YES), the print data 41A stored in the memory 19 as one set together with the identification code information 45A coinciding with the identification code information 55 is identified as the data wherein the printing error occurs (S1022). Then, the print data 41A is retransmitted to the printer 21 in a print file 31A with the identification code 45A attached thereto (S1204, S104 and S108).

Thus, the printer 21 obtains the identification code 45A attached to the print data 41A, prior to printing the print data 41A (S303). The printer 21 then sets the identification code 45A (item having the same contents as the identification code information 55) in the management data base 24 (S302). If a printing error occurs in the print data 41A (S304: YES), the status information 51 which represents information with respect to the printing error is set in the management data base 24 together with the identification code 45A (item having the same contents as the identification code information 55) (S305).

Accordingly, the personal computer 11A can identify the print data 41A to which the identification code 45A having the same contents as the identification code information 55 is attached as print data with respect to the printing error in the printer 21 (S1022). The personal computer 11A can thus retransmit automatically the print file 31A with the identification code 45A attached to the print data 41A thus identified, to the printer 21 (S1204, S104 and S108).

The personal computer 11A displays on the display 17 a message regarding information with respect to the printing error in the status information 51 which was obtained together with the identification code information 55 (S206). In response to depression of the print resumption button 18 (S1201: YES), the print data 41A regarding the printing errors is retransmitted to the printer 21 in the print file 31A with the identification code 45A attached thereto (S1204, S104 and S108).

The decision on whether to automatically retransmit the print data 41A with respect to the printing error in the printer 21 from the personal computer 11A to the printer 21 in a print file 31A having the identification code 45A attached thereto (S1204, S104 and S108) can be left to the user who will depress the print resumption button 18.

The above-described processes which are carried out in the personal computer 11A are the same in the personal computers 11B and 11C.

### [5. Other]

The present invention is not limited to the foregoing embodiment alone, but may be changed and modified within a scope not departing from the true spirit thereof.

For instance, when the identification code 45A is set in the management data base 24 (S302), the identification code 45A may be included or otherwise attached to the status information 51 in the management data base 24. In this case, the personal computer 11A can obtain the status information 51 and the identification code 55 (item which has the same contents as the identification code 45A) at the same time (S201, S202).

The print data 41A with respect to the printing errors in the printer 21 may also be retransmitted automatically from the personal computer 11A to the printer 21 in the print file 31A having the identification code 45A attached thereto, even if the print resumption button 18 is not depressed. In this case, the determination in S1201 of FIG. 10 above includes only determination on whether or not it is possible for the printer 21 to resume printing.

A user may carry out an operation to retrieve print data 41A regarding the printing error in the printer 21 from the personal computer 11A and retransmit this print data 41A to the printer 21 in the print file 31A with the identification code 45A attached thereto. In this case, if the control program shown in FIG. 9 above is executed in the personal computer 11 through the printer driver 13, the process S1101 is skipped. Specifically, the control program shown in FIG. 12 is executed through the printer driver 13. Further, if the control program shown in FIG. 10 is executed through the status monitor 15, the processes from S1201 through S1205 are skipped. Specifically, the control program shown in FIG. 13 is executed through the status monitor 15.

While the presently preferred embodiment has been shown and described, it is to be understood that this disclosure is for the purpose of illustration and that various changes and modification may be made without departing from the scope of the invention as set forth in the appended claims.

## Claims

1. A printing system (1) comprising:
a plurality of information processing devices (11A, 11B and 11C) wherein print data (41A) is created;
a printer (21) which prints print data (41A) created in any of the plurality of information processing devices (11A, 11B and 11C) and creates status information (51) with respect to printing the print data (41A); and
a network (101) which is formed by connecting the plurality of information processing devices (11A, 11B and 11C) with the printer (21);
wherein the plurality of information processing devices (11A, 11B and 11C) respectively executes, when the print data (41A) has been created, processes of:
(a) creating identification code information (45A) which includes at least information (42A) for identifying an information processing device (11A, 11B and 11C) which transmits the print data (41A), information (43A) for identifying the print data (41A) and information (44A) for identifying a user who transmits the print data (41A);
(b) transmitting the print data (41A) to the printer (21), with the identification code information (45A) attached thereto;
(c) obtaining the status information (51) from the printer (21) on a regular basis or in response to a special event; and
(d) identifying the print data (41A) and retransmitting the identified print data (41A) to the printer (21), if it is determined that the status information (51) concerns a printing error in the print data (41A) created in the information processing device (11A, 11B and 11C) which makes it impossible for the printer (21) to resume printing, by analyzing the status information (51);
alternatively, the printer (21) executes controls as follows, at the time of printing the print data (41A):
(1) obtaining the identification code information (45A) from the print data (41A); and
(2) including the identification code information (45A) in the status information (51), together with information concerning the printing error, in case the printing error occurs in the print data (41A).

2. The printing system (1) of claim 1,
wherein the plurality of information processing devices (11A, 11B and 11C) comprise a display (17) and a print resumption button (18), and further execute, in executing the process (d), processes of:
(e) displaying a message on the display (17) with respect to information concerning a printing error which is included in the status information (51); and
(f) retransmitting the print data (41A) to the printer (21) on condition the print resumption button (18) has been depressed.
